# EUROPEAN PATENT SPECIFICATION

(11) **EP 0 458 401 B1**
(45) Date of publication and mention of the grant of the patent: **10.05.1995**
(21) Application number: 91201182.2
(22) Date of filing: 16.05.1991
(51) Int. Cl.: F16K 31/26, E03D 1/33

(54) **Float valve with level adjustment by rack, especially for water storage cisterns in sanitary systems**
Schwimmventil mit Niveauregelung durch Gestell, insbesondere für Wasserbehälter von Sanitäranlagen
Clapet à flotteur avec réglage de niveau par étagère, notamment pour citernes de stockage d'eau des installations sanitaires

(30) Priority: 25.05.1990 IT 2125990 U
(43) Date of publication of application: 27.11.1991
(73) Proprietor: Oliveira & Irmao S.A., 3800 Aveiro (PT)
(72) Inventor: Cecchi, Enzo, 98000 Monaco (MC)
(74) Representative: Boggio, Luigi

(56) References cited:
- DE-A- 2 132 631
- FR-A- 2 491 969
- GB-A- 1 285 571
- NL-A- 7 009 447
- NL-A- 7 104 255
- US-A- 4 347 866

## Description

The subject of the present invention is a float valve for controlling the filling level of water storage cisterns for the flushing of sanitary systems, equipped with a filling level adjustment device of limited size.

For the flushing of sanitary systems, storage cisterns are widespread, in which there accumulates a quantity of water sufficient, at the time of discharge, for creating sufficient capacity for proper flushing of the water closet bowl.

The filling of such cisterns, which may be of the external type or of the reduced thickness type for housing within a partition wall, takes place by means of a float valve, adapted for closing the inlet opening for the water when the water surface in the cistern reaches the desired level.

The known float valves are usually composed of a valve, the body of which is connected to the inlet pipe for water into the cistern, and equipped with a movable closure member which closes the opening under the thrust action of a rod, at the free end of which a float is mounted; the position at which the valve comes into action can thus be selected by bending said rod until it becomes immersed by a sufficient amount to create the thrust necessary, with the lever ratios present, for closing the closure member of the valve against its seating.

Valves of this type, however, are especially noisy: in fact, when the cistern is empty or only partly filled, the water falls into the cistern from a mounting position for the valve located near the upper edge of said cistern, producing the typical gurgling noise; a further disadvantage of the floats of the conventional type with a rod results from the appreciable overall size in the longitudinal direction of the rod and of the float mounted at its end, which in some cases can interfere with the discharge valve for the cistern. A float valve according to the preamble of claim 1 known from NL-A-7104255.

Valves are also known, for example from Utility Model IT-209,417, which possess an auxiliary chamber, in which the float is positioned, these valves being adapted for reducing the volume to be filled for the purpose of obtaining the necessary increase in level for closing the valve; such valves exhibit, however, difficult adjustment of the water level in the cistern, because it is necessary, in order to make this adjustment, to adjust auxiliary means fitted to one of the sides of the chamber, the displacement of which means varies the entry level of the water into said chamber, in this way fixing the instant at which the closure of the feed opening comes into effect.

The problem therefore arises of providing a float valve which shall be silent in all stages of filling, shall provide an effective seal without giving rise to losses and drips, shall be of reduced overall size and shall enable even inexperienced persons to adjust, accurately and directly, the water level at which the feed shut-off valve closes.

The valve must also be capable of being fitted to already existing storage cisterns which have not been expressly designed for receiving it, and shall be easy and economical to manufacture and maintain.

Said results are achieved by the present invention, which is defined in claim 1.

Particular embodiments of the invention are defined in the dependent claims.

A preferred embodiment of the invention is described here below with reference to the attached drawings, in which there are shown:

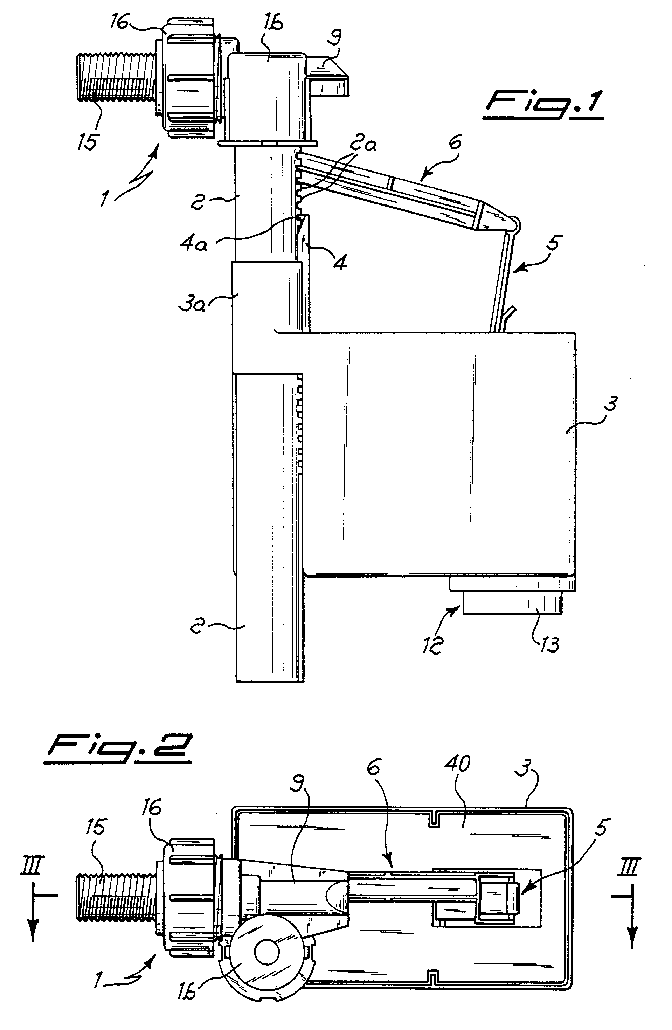

- in Figure 1:: a general lateral view of the valve according to this invention;
- in Figure 2:: a plan view of the valve of Figure 1;
- in Figure 3:: a section on the plane III-III of Figure 2.

As the figures show, the valve according to this invention is composed basically of an inlet body 1, formed of an inlet pipe 1a having a horizontal axis and integral with a tubular connector 1b having a vertical axis, disposed laterally of the inlet pipe 1a and brought into communication with it via an opening 1c.

Said tubular connector 1b is fitted to a length of down-pipe 2, equipped with a reference set of teeth 2a formed on a sector of the external surface of same, a chamber 3 being associated with said length of pipe 2 by a sleeve 3a integral with this chamber.

The connection between sleeve 3a and pipe 2 is made reversibly fixed by means of a tongue 4, equipped with a small tooth 4a, which engages into the gaps of the set of teeth 2a of the pipe 2, thus fixing the position of the chamber relative to the valve 1. In order to vary said position, it is only necessary to act transversely on the tongue 4, in such a way as to disengage the small tooth 4a from the set of teeth 2a, thus making the pipe 2 and the chamber 3 free from one another, and to cause the chamber to slide as far as the desired new position, in correspondence with which the release of the tongue 4 causes renewed engagement of the small tooth 4a into the set of teeth 2a, with consequent relative blocking of the chamber 3 on the pipe 2 in the various preselected positions.

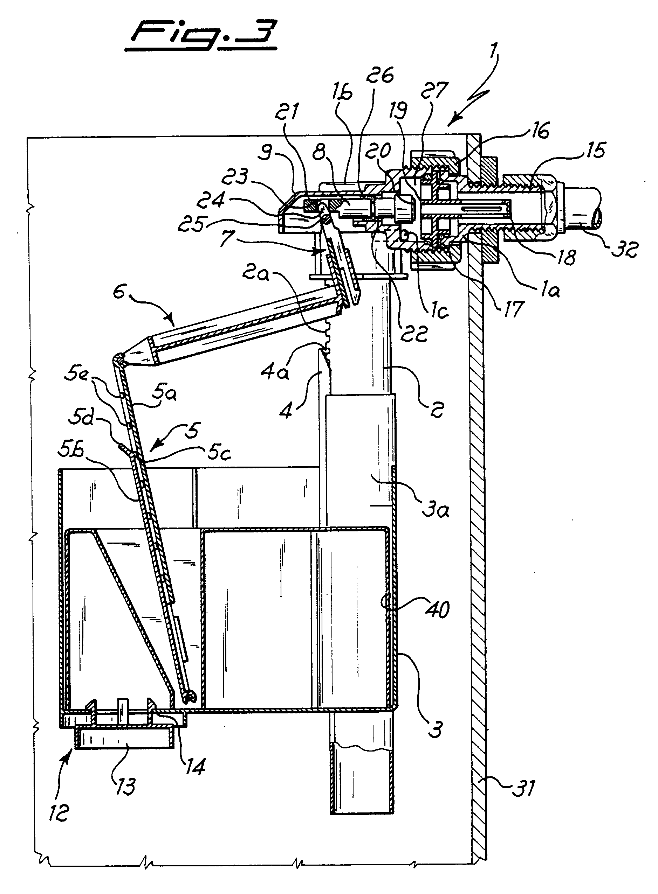

Inside the chamber 3 is housed a float 40, connected by means of a connecting rod of adjustable length 5, a first lever 6 and a second-lever 7, to the closure member 8, which can be seen in Fig. 3, housed inside the inlet pipe 1a of the body 1.

The adjustable connecting rod 5 is composed of a slider 5a, slidable inside a guide element 5b, the fixing of which in position is assured by the engagement of a small tooth 5c of an end tongue 5d of the guide 5b with pairs of notches 5e disposed at various heights along the slider 5a.

The chamber 3 is also provided with a bottom valve 12, having a floating movable closure member 13, for example of the open-bottomed bell type, forming a seal, when thrust upwards, against a rim seating 14.

In greater detail (Fig. 3), the inlet body 1 possesses a threaded connector 15, suitably of metallic material, usually brass, according to the specifications of existing standards, connected by means of a threaded tightening collar 16 to the inlet pipe 1a; the collar 16 also blocks, inside the inlet pipe 1a, the sealing seating 17, having an inlet duct of small cross-section 18 and sealing surface 19, against which the insert of elastomeric material 20 of the closure member 8 acts when it is pushed onto the seating.

The inlet duct of reduced section 18, which has the function of reducing the area over which the closure member must withstand the thrust created by the hydraulic mains pressure, also constitutes a filter element, adapted for preventing impurities present in the pipework from damaging the sealing seating of the valve by preventing its correct and prompt closure.

The closure member 8 is equipped with a guide rod 21, slidable in the seating 22 of the body 9 and equipped with a slot 23, into which is inserted the end 24 of the lever 7, pivotally mounted on the pipe 1a by a pin 25.

The guide rod 21 of the closure member is slidable with clearance in its seating 22, for the purpose of allowing sealing between the rod of the closure member and its slide seating; on the rod 21, in a position adjacent to the seating for the insert 20 of the closure member, there is provided a cased gland seal 26, which forms the seal between the seating and the obturating member itself, without introducing friction in the sliding of the obturating member in the opening and closure phases of the valve.

The float 40, connected in articulated manner to the lower end of the connecting rod 5, can slide in the chamber 3 guided along the down-pipe 2 and is appropriately composed of an open-bottomed bell, inside which there remains trapped a sufficient volume of air to ensure a buoyancy thrust adapted for creating, through the multiplication ratio provided by said lever arms, the necessary force on the closure member 8 towards the sealing seating 19 for obtaining a seal at the hydraulic pressure values of the mains, as specified by the standards in force.

As illustrated in Figure 3, the valve according to this invention is housed in a flushing cistern 31 for sanitary installations, of which one wall is indicated diagrammatically, and is connected to it by the connector 15, to which is also connected the mains water inlet pipe 32.

The valve is therefore supported in the cistern by the connector 15 at a fixed elevation. The adjustment of the filling level for the cistern is achieved, in association with the characteristics of the cistern itself, by adjusting the height of the chamber 3 relative to the pipe 2 by means of the already described unblocking and blocking of the tongue 4, and also by the variation in the length of the adjustable connecting rod 5, which is effected by releasing the slider 5a and causing it to slide inside the guide 5b as far as the new position, for the purpose of keeping constant the angle of slope of the lever 7 corresponding to the opening or closing stroke of the insert 20.

This adjustment determines the level of the water in the cistern 31, above which an overflow takes place into the chamber 3. In the condition illustrated in Figure 3, the cistern 31 is empty; the float 40 is therefore in the fully lowered position and the closure member 8 is then held open by the associated actuating levers.

The water coming from the pipe 32 enters, via the aperture 19, into the opening 27 and flows via the aperture 1c into the tubular connector 1b and into the down-pipe 2.

As the water level in the cistern 31 rises, the chamber becomes partially immersed, and remains closed by the bottom valve 12, the float 13 of which is thrust upwards, as the free level of the water rises, to close the discharge opening surrounded by the sealing seating 14.

The chamber 3 therefore remains empty, and the float 40 does not change its position, thus keeping open the inlet for the water.

When the level of the water in the cistern 31 reaches the level predetermined by the edge of the chamber 3, the water overflows into this chamber, very rapidly causing the rise of the float 40, guided along the pipe 2, which rise causes, by means of the lever system 5, 6, 7, movement of the closure member 8 until the opening 19 is closed and entry for the water is blocked.

This phase occurs in a very short time because of the small volume to be filled, composed of the volume only of the chamber 3 corresponding to the rise in level of the float which actuates closure of the closure member 8.

On emptying of the cistern 31, the bottom valve 12, the float 13 of which is no longer pressed against the seating 14 by the water, opens, allowing the chamber 3 to empty and to re-adopt the conditions shown in Figure 3.

The construction of the valve according to this invention therefore makes it possible to obtain maximum quietness in operation, to dismantle it rapidly, without any action upon the metal connections of the water mains, and lends itself to a choice in level at which the valve shall close, for the purpose of adapting it to the various cistern constructions in which it may be mounted, with simple operation for adjusting the level of the edge of the chamber without the need for further interventions or auxiliary means.

## Claims

1. Float valve with level adjustment, especially for water storage cisterns for sanitary systems, composed of an inlet body (1) capable of being connected to the water supply mains, disposed horizontally inside a storage cistern and equipped with a support means having a vertical axis, capable of being connected to a chamber (3) containing a slidable float (40) connected, by mechanical transmission and gearing means for the buoyancy thrust of said float, to a closure member (8) slidably housed in said body (1) and creating the seal against a seating (18) having a small aperture situated inside said body (1) when the float is in a raised position, and in said support means (2) is mounted outside said chamber and that there is provided between them, by coupling and guiding means and reversible blocking means, a linear relative sliding for the purpose of creating a reversible adjustment of the level of the edge of the chamber with respect to the bottom of the storage cistern, and in that said transmission means for the buoyancy thrust to the closure member for shutting-off the water supply comprise at least one element adjustable in length for the purpose of maintaining constant the stroke of the closure member as the level of the chamber is varied, characterised in that said support means is constituted by a down-pipe (2) integral with the valve, said coupling and guiding means are composed of said down-pipe (2) and a sleeve (3a), which is integral with said chamber (3), in correspondence with one corner of it, and which can slide on said pipe (2), and in that said adjustable element of said transmission means is constituted of a connecting rod (5) capable of being varied in its length, composed of a slider (5a), articulated to a transmission lever (6) and slidable inside a guide (5b) connected, at its lower end, to the float (40).

2. Float valve according to Claim 1, characterized by the fact that said blocking means are preferably composed of a tongue, (4) integral with said sleeve (32) of the chamber, (3) and equipped at its free end with a small tooth (42) adapted for engaging into corresponding seatings of a set of teeth (22) formed on a sector of the outer surface of said pipe (2).

3. Valve according to Claim 1, characterized in that said slider (5a) is reversibly blocked on said guide (5b) by the engagement of a toothed element, (5c) integral with an end tongue (5d) of the guide, (5b) into corresponding seatings (5e) formed on said slider (5a).

4. Float valve for storage cisterns in sanitary systems according to Claim 1, characterized by the fact that said inlet body (1) is composed of an inlet pipe (12) having its axis horizontal, firmly connected to and in communication with a tubular connector (1b) having a vertical axis disposed laterally of it.

## Patentansprüche

1. Schwimmventil mit Niveauregulierung, insbesondere für Wasserspeicherzisternen für Sanitärsysteme, zusammengesetzt aus einem Einlaßkörper (1), welcher mit der Wasserzuführeinrichtung verbunden werden kann und horizontal innerhalb einer Speicherzisterne angeordnet ist und mit einer Trageeinrichtung mit einer vertikalen Achse ausgestattet ist, und zwar mit einer Kammer (3) verbindbar, welche einen gleitfähigen Schwimmer (40) beinhaltet, welcher mittels mechanischer Übertragung und Getriebeeinrichtungen für den Auftriebdruck des Schwimmers mit einem Schließglied (8) verbunden ist, welches gleitfähig in dem Körper (1) gelagert ist und die Abdichtung gegen eine Sitzfläche (18) mit einer kleinen in dem Körper (1) angeordneten Öffnung erzeugt, wenn der Schwimmer sich in einer gehobenen Stellung befindet, wobei die Trageeinrichtung (2) außerhalb der Kammer angebracht ist und zwischen ihnen über eine Kopplungseinrichtung, eine Führungseinrichtung und eine reversible Blockiereinrichtung ein lineares relatives Gleiten bereitgestellt ist zum Zwecke einer reversiblen Einstellung des Niveaus der Kante der Kammer bezüglich zu dem Boden der Speicherzisterne, und wobei die Übertragungseinrichtung für den Auftriebdruck auf das Schließglied zum Abschließen der Wasserzufuhr zumindest ein in der Länge einstellbares Element umfaßt, zum Zweck den Hub des Schließgliedes konstant zu halten, wenn das Niveau der Kammer verändert wird, dadurch gekennzeichnet, daß die Trageeinrichtung gebildet ist aus einer mit dem Ventil einstückigen Abwärtsleitung (2), wobei die Kopplungs- und Führungseinrichtung aus der Abwärtsleitung (2) und einem Rohr (3a) gebildet sind, das mit der Kammer (3) einstückig ist, und zwar einer Ecke davon entsprechend, und welches auf der Leitung (2) gleiten kann, und daß das einstellbare Element der Übertragungseinrichtung aus einer Verbindungsstange (5) gebildet ist, welche in ihrer Länge variierbar ist und aus einem Gleiter (5a) zusammengesetzt ist, welcher an einem Übertragungshebel (6) angelenkt ist und in einer Führung (5b) gleitet, die an ihrem unteren Ende mit dem Schwimmer (40) verbunden ist.

2. Schwimmventil gemäß Anspruch 1, dadurch gekennzeichnet, daß die Blockiereinrichtung bevorzugt zusammengesetzt ist aus einer Zunge (4) welche einstückig mit dem Rohr (3a) der Kammer (3) ausgebildet ist, und an ihrem freien Ende mit einem kleinen Zahn (4a) versehen ist, welcher angepaßt ist, um in die entsprechenden Sitzflächen einer Gruppe von Zähnen (2a) einzugreifen, welche auf einem Abschnitt der äußeren Fläche der Leitung (2) gebildet sind.

3. Ventil gemäß Anspruch 1, dadurch gekennzeichnet, daß der Gleiter (5a) reversibel auf der Führung (5b) blockiert ist durch den Eingriff eines mit einer Endzunge (5d) der Führung (5b) einstückigen gezahnten Elementes (5c) in entsprechende auf dem Gleiter (5a) gebildete Lagerungen (5e).

4. Schwimmventil für Speicherzisternen in sanitären Systemen gemäß Anspruch 1, dadurch gekennzeichnet, daß der Einlaßkörper (1) aus einer Einlaßleitung (12) zusammengesetzt ist, die eine horizontale Achse aufweist, die fest verbunden und in Strömungsverbindung ist mit einer rohrförmigen Verbinder (1b) mit einer vertikalen Achse, und seitlich bzw. quer davon angeordnet ist.

## Revendications

1. Clapet à flotteur avec réglage de niveau, notamment pour des réservoirs de stockage d'eau d'installations sanitaires, composé d'un corps d'entrée (1) pouvant être relié au réseau d'alimentation d'eau, disposé horizontalement à l'intérieur d'un réservoir de stockage et équipé de moyens de support dont l'axe est vertical, pouvant être relié à une chambre (3) contenant un flotteur coulissant (40) relié, par des moyens de transmission et d'engrenage mécanique pour la poussée flottante dudit flotteur, à un organe de fermeture (8) placé de manière coulissante dans ledit corps (1) et formant l'obturation contre un siège (18) présentant un petit trou situé à l'intérieur dudit corps (1) quand ledit flotteur est en position soulevée, et en ce que lesdits moyens de support (2) sont montés à l'extérieur de ladite chambre, et qu'il est prévu entre eux, par des moyens d 'accouplement et de guidage et des moyens de blocage réversible, un coulissement relatif linéaire dans le but de créer un réglage réversible du niveau du bord de la chambre en fonction du fond du réservoir de stockage, et en ce que lesdits moyens de transmission pour la poussée flottante vers l'organe de fermeture pour couper l'alimentation de l'eau comprennent au moins un élément réglable en longueur dans le but de maintenir constante la course de l'organe de fermeture avec les variations du niveau de la chambre, caractérisé en ce que lesdits moyens de support sont constitués par une conduite de descente (2) faisant partie intégrante du clapet, lesdits organes de guidage et d'accouplement se composent de ladite conduite de descente (2) et d'un manchon (3a) faisant partie intégrante de ladite chambre (3) en correspondance avec l'un de ses coins et qui peut coulisser sur ladite conduite (2), et en ce que ledit élément réglable desdits moyens de transmission est constitué d'une tige de liaison (5) de longueur variable, composée d'une pièce coulissante (5a), articulée à un levier de transmission (6) et coulissant à l'intérieur d'un guide (5b) relié, à son extrémité supérieure, au flotteur (40).

2. Clapet à flotteur selon la revendication 1, caractérisé par le fait que lesdits moyens de blocage sont de préférence composés d'une languette (4) faisant partie intégrante dudit manchon (32) de la chambre (3) et sont équipés, à leur extrémité libre, d'une petite dent (12) adaptée pour s'engager dans des sièges correspondants d'une série de dents (22) formées sur un secteur de la surface extérieure de ladite conduite (2).

3. Clapet selon la revendication 1, caractérisé en ce que ladite pièce coulissante (5a) est bloquée de manière réversible sur ledit guide (5b) par l'engagement d'un élément denté (5c) faisant partie intégrante d'une languette d'extrémité (5d) du guide (5b), dans des sièges (5e) correspondants formés sur ladite pièce coulissante (5a).

4. Clapet à flotteur pour réservoirs de stockage d'installations sanitaires selon la revendication 1, caractérisé par le fait que ledit corps d'entrée (1) est composé d'une conduite d'entrée (12) ayant un axe horizontal, reliée fixement de manière à communiquer à un connecteur tubulaire (1b) ayant un axe vertical disposé latéralement par rapport à ce dernier.
